# EUROPÄISCHE PATENTSCHRIFT

(11) **EP 1 339 480 B1**
(45) Veröffentlichungstag und Bekanntmachung des Hinweises auf die Patenterteilung: **14.09.2005**
(21) Anmeldenummer: 01962859.3
(22) Anmeldetag: 18.07.2001
(51) Int. Cl.: B01D 61/06

(54) **VERFAHREN UND VORRICHTUNG ZUM ENTSALZEN VON WASSER**
METHOD AND DEVICE FOR DESALTING WATER
PROCEDE ET DISPOSITIF DE DESSALEMENT DE L'EAU

(30) Priorität: 21.11.2000 DE 10057613
(43) Veröffentlichungstag der Anmeldung: 03.09.2003
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2001/008271
(87) Internationale Veröffentlichungsnummer: WO 2002/041979

(56) Entgegenhaltungen:
- DE-A- 2 924 971
- US-A- 4 178 240
- US-A- 4 367 140
- US-A- 5 797 429
- US-A- 6 017 200

## Beschreibung

Die Erfindung betrifft ein Verfahren zum Entsalzen von Wasser mit der Umkehrosmose gemäß dem Oberbegriff des Anspruchs 1 sowie eine Vorrichtung zur Durchführung dieses Verfahrens.

Ein solches Verfahren und eine solche Vorrichtung sind in der deutschen Patentanmeldung 199 33 147.2 beschrieben. Dabei wird das Salzwasser unter einem ersten Druck in eine Druckausgleichsvorrichtung eingeleitet und von der Druckausgleichsvorrichtung unter einem zweiten, höheren Druck in ein Membranmodul eingeleitet, wobei aus dem Membranmodul entsalztes Wasser und konzentriertes Salzwasser ausgeleitet wird. Entsalztes Wasser ist dabei als Wasser mit gegenüber dem in die Vorrichtung eingeleiteten Salzwasser reduziertem Salzgehalt zu verstehen. Um dabei den Wirkungsgrad und somit die Energiebilanz bei einem solchen Verfahren und einer solchen Vorrichtung zu erhöhen, wird dort vorgeschlagen, das aus dem Membranmodul ausgeleitete konzentrierte Salzwasser unter dem zweiten Druck in die Druckausgleichsvorrichtung kontinuierlich einzuleiten und dort zur Beaufschlagung des in die Druckausgleichsvorrichtung eingeleiteten Salzwassers mit dem zweiten Druck und zur Einleitung des Salzwassers in das Membranmodul zu benutzen. Die Einleitung des konzentrierten Salzwassers in die Druckausgleichsvorrichtung erfolgt durch Rückschlagventile, und die Ableitung des konzentrierten Salzwassers aus der Druckausgleichsvorrichtung erfolgt dabei mittels gesteuerter Hauptventile. Diese gesteuerten Hauptventile sind bevorzugt aktiv steuerbar und in entsprechenden Verbindungsleitungen zwischen dem Membranmodul und der Druckausgleichsvorrichtung bzw. zwischen der Druckausgleichsvorrichtung und dem Ausgang des konzentrierten Salzwassers angeordnet.

Ein eingangs genanntes Verfahren und eine eingangs genannte Vorrichtung sind auch aus der EP-A-0 028 913 bekannt. Zum Ausgleich von Druckverlusten ist dort eine Pumpe vorgesehen.

Aus der DE-A- 24 48 985 ist die Rückgewinnung von Energie aus einer hochgespannten Flüssigkeit mittels eines mit dieser Flüssigkeit betriebenen Wassermotors bekannt. Dabei sind wiederum gegenphasig arbeitende Zylinder/Kolben-Kombinationen vorgesehen, die jedoch über Pleuelstangen mechanisch mit einer Kurbelwelle in Verbindung stehen, die wiederum von einem Antrieb angetrieben wird, um Druckverluste auszugleichen. Diesem System sind jedoch einige Nachteile immanent, wie zum Beispiel eine komplizierte Lagerung und Führung der Kolben und Pleuelstangen, da diese durch die Kurbelwelle Bewegungen in zwei Richtungen unterworfen werden. Aus der US 5,797,429 ist in Fig. 1 eine Vorrichtung zum Entsalzen von Wasser mit der Umkehrosmose bekannt welche zur Ableitung konzentrierten Salzwasser aus einem Membranmodul und aus Austauschmitteln Hauptventile und parallele Nebenventile vorgesehen sind.

Aus der US 6,017,200 ist eine Vorrichtung zum Entsalzen von Wasser mit der Umkehrosmose mit zwei gegenphasig arbeitenden Kolben/Zylindern-Vorrichtungen bekannt.

Bei den bekannten Verfahren und den bekannten Vorrichtungen werden die Hauptventile mit einem hohen Druck beaufschlagt. Werden die Hauptventile betätigt, entsteht gerade im ersten Moment der Öffnung bzw. im letzten Moment des Schließens eines solchen Hauptventils eine hohe mechanische Beanspruchung. Da diese Hauptventile jedoch für eine große Durchflussmenge ausgelegt sind, müssen sie entsprechend groß und massebehaftet sein.

Da die Hauptventile aufgrund ihrer Größe und Masse relativ langsam sind, sind sie insbesondere zu Beginn des Öffnungsvorgangs und am Ende des Schließvorgangs relativ lange großen Druckänderungen ausgesetzt. Da derartige Vorrichtungen möglichst ohne Unterbrechung arbeiten sollen, stehen diese Hauptventile also unter einer hohen Dauerbelastung, einerseits durch den Betrag und die Dauer der Belastung und andererseits durch die Häufigkeit der Lastspiele, so dass sie entsprechend schnell verschleissen.

Der Erfindung liegt deshalb die Aufgabe zugrunde, das eingangs genannte Verfahren bzw. die eingangs genannte Vorrichtung hinsichtlich der genannten Nachteile zu verbessern und so auszugestalten, dass die Hauptventile weniger verschleissen.

Diese Aufgabe wird ausgehend von dem eingangs genannten Verfahren und der eingangs genannten Vorrichtung durch das Verfahren gemäß Anspruch 1 bzw. durch die Vorrichtung gemäß Anspruch 15 gelöst.

Der Erfindung liegt dabei die Erkenntnis zugrunde, dass insbesondere beim Öffnen und Schließen der Hauptventile Belastungsspitzen auftreten, die es zu vermeiden gilt. Dies wird mittels der erfindungsgemäß vorgesehenen Nebenventile, die auch als Bypass-Ventile bezeichnet werden können, erreicht, über die ein Teil des beim Öffnen bzw. Schließen der Hauptventile auftretenden Druckes um die Hauptventile geleitet wird. Dazu sind geeignete Nebenleitungen um die Hauptventile vorgesehen, in denen die Nebenventile angeordnet sind.

Bevorzugt werden die Nebenventile so gesteuert, dass sie kurz vor dem Öffnen bzw. Schließen der Hauptventile geöffnet werden und/oder dass sie nur während des Öffnungs- bzw. Schließvorgangs der Hauptventile geöffnet sind. Ansonsten sind die Nebenventile normalerweise geschlossen.

In einer vorteilhaften Ausgestaltung weisen die Nebenventile einen geringeren Querschnitt auf als die Hauptventile. Der Querschnitt der Nebenventile kann sogar deutlich geringer sein als der Querschnitt der Hauptventile, und die Nebenventile können eine erheblich höhere Druckresistenz aufweisen. Damit kann durch eine geeignete Steuerung der Nebenventile die Belastung der Hauptventile deutlich verringert und damit deren Lebensdauer proportional erhöht werden.

In einer alternativen Ausgestaltung der Erfindung kann der Querschnitt der Nebenventile beliebig gewählt sein. Über den Querschnitt der Nebenventile kann auch ein Beitrag zum Flüssigkeitstransport geliefert werden, was durch entsprechende Steuerungen vorgesehen sein kann. Dies bedeutet, dass die Nebenventile zur selben Zeit geöffnet bzw. geschlossen sind wie die entsprechend parallel dazu angeordneten Hauptventile mitdem Unterschied, dass die Nebenventile etwas früher als die parallelen Hauptventile geöffnet und etwas später als die parallelen Hauptventile geschlossen werden, um diese zu entlasten.

In einer bevorzugten Ausgestaltung der Erfindung ist ein Druckbehälter vorgesehen, der mit dem Ausgang zur Ableitung des konzentrierten Salzwassers aus dem Membranmodul und mit dem Eingang der Druckausgleichsvorrichtung verbunden ist. Dieser Druckbehälter ist daher mit dem selben Druck beaufschlagt, wie das konzentrierte Salzwasser selbst. Zweck dieses Druckbehälters ist es, die bei den Ventilbetätigungen in Folge von Volumenverlusten unvermeidlich auftretenden Druckschwankungen auszugleichen, um einen möglichst konstanten Betriebsdruck im Membranmodul sicherzustellen.

In einer weiteren vorteilhaften Ausgestaltung der Erfindung sind Durchflussmengenbegrenzer in den Zuleitungen zu den Nebenventilen vorgesehen, die einen abrupten Druckausgleich verhindern, indem sie die maximale Durchflussmenge begrenzen und somit zu einem allmählichen Druckausgleich und damit zu langsamen Druckänderungen anstelle schlagartiger Schwankungen beitragen. Diese können unterschiedlich dimensioniert sein, um die "Strömungswiderstände" unterschiedlich groß auszugestalten. Die Durchflussmengenbegrenzer können auch in die Nebenventile integriert sein, da diese ohnehin einen geringen Querschnitt aufweisen.

In einer Weiterbildung der Erfindung ist vorgesehen, dass die Druckausgleichsvorrichtung zwei gegenphasig arbeitende Kolben/Zylinder-Vorrichtungen aufweist und dass die Kolben der Kolben/Zylinder-Vorrichtungen durch eine Kolbenstange verbunden sind. Eine solche Kolbenstange und deren Funktion ist aus der EP-A-0 028 913 bekannt. Anders als bei dieser bekannten Kolbenstange ist bei dieser Weiterbildung der Erfindung jedoch keine Pumpe zum Ausgleich von Druckverlusten vorgesehen.

Vielmehr ist in einer weiterführenden Ausgestaltung der Erfindung ein Antrieb für die Kolbenstange vorgesehen, um Druckverluste auszugleichen. Dieser Antrieb kann beispielsweise darin bestehen, dass die Kolbenstange in einem mittleren Abschnitt eine Verzahnung aufweist, in welche Ritzel eingreifen, die auf geeignete Weise angetrieben werden. Dadurch kann der gewünschte Betriebsdruck aufrechterhalten werden.

Bei der erfindungsgemäßen Vorrichtung kann eine einen hohen Druck aufbringende Hochdruckpumpe gänzlich entfallen und durch eine einen wesentlich niedrigeren Druck aufbringende Pumpe ersetzt werden, wenn der Druck, den das konzentrierte Salzwasser am Ausgang des Membranmoduls zwangsläufig aufweist, durch kontinuierliche Rückführung dieses konzentrierten Salzwassers in die Druckausgleichsvorrichtung zur Druckbeaufschlagung des in die Druckausgleichsvorrichtung eingepumpten Salzwassers ausgenutzt wird. Wesentlich ist hierbei vor allem auch, dass dies kontinuierlich erfolgt, da ansonsten der Druck in der Zuleitung des Salzwassers von der Druckausgleichsvorrichtung an das Membranmodul nachlassen und von einer Hochdruckpumpe nachgeliefert werden müßte und auch eine kontinuierliche Erzeugung von entsalztem Wasser nicht möglich wäre.

Weitere vorteilhafte Weiterbildungen des erfindungsgemäßen Verfahrens und der erfindungsgemäßen Vorrichtung ergeben sich insbesondere aus den Unteransprüchen. Es sei darauf hingewiesen, dass die erfindungsgemäße Vorrichtung in gleicher oder entsprechender Weise weitergebildet sein kann und entsprechende Ausgestaltungen aufweisen kann, wie dies oben in Verbindung mit dem erfindungsgemäßen Verfahren erläutert ist und wie dies in den auf Anspruch 1 rückbezogenen Unteransprüchen angegeben ist.

Die Erfindung wird nachfolgend anhand der Zeichnungen näher erläutert. Es zeigen:
- Figur 1: ein Blockschaltbild zur Erläuterung des erfindungsgemäßen Verfahrens,
- Figur 2: eine Ausführungsform der erfindungsgemäßen Vorrichtung in einem ersten Betriebszustand,
- Figur 3: eine Darstellung dieser Ausführungsform in einem zweiten Betriebszustand und
- Figur 4: eine Darstellung der Betriebszustände dieser Ausführungsform während eines kompletten Arbeitszyklus.

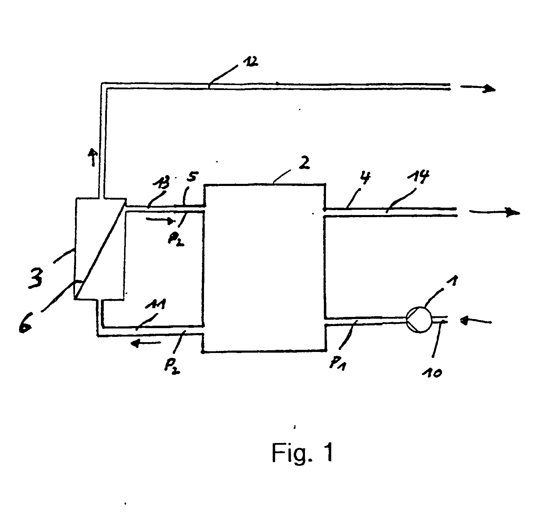

Das Blockschaltbild in Figur 1 zeigt eine Förderpumpe 1 zum Einleiten von Salzwasser 10 in eine Druckausgleichsvorrichtung 2 unter einem ersten Druck p₁. Aus der Druckausgleichsvorrichtung 2 wird dasselbe Salzwasser 11, das nun jedoch mit einem hohen Arbeitsdruck beaufschlagt ist, dem Membranmodul 3 zugeleitet. Dort tritt ein Teil des Salzwassers 11 durch die Membran 6 hindurch (zum Beispiel 25% des Salzwassers 11), wird dabei entsalzt und als entsalztes Wasser 1 2 abgeleitet. Der restliche Teil des Salzwassers 11 (zum Beispiel 75 %) kann die Membran 6 nicht durchtreten und wird mittels der Verbindungsleitung 5 als konzentriertes Salzwasser 13, das noch immer etwa unter dem hohen Druck p₂ steht, der Druckausgleichsvorrichtung 2 wieder zugeleitet. Dort wird dieser hohe Druck in noch näher zu erläuternder Weise dazu ausgenutzt, das in die Druckausgleichsvorrichtung 2 eingeleitete Salzwasser 10 mit diesem hohen Druck zu beaufschlagen und dem Membranmodul 3 an dessen Eingang zuzuleiten. Gleichzeitig wird in ebenfalls noch näher zu erläuternder Weise dieser Druck in der Druckausgleichsvorrichtung 2 dazu genutzt, darin befindliches konzentriertes Salzwasser 14 über die Ableitung 4 endgültig abzuleiten und der Druckausgleichsvorrichtung 2 unkonzentriertes Salzwasser 10 zuzuführen. Alle beschriebenen Vorgänge erfolgen dabei gleichzeitig und kontinuierlich, so dass eine den hohen Arbeitsdruck nachliefernde Hochdruckpumpe nicht erforderlich ist und entsalztes Wasser 12 kontinuierlich zur Verfügung steht.

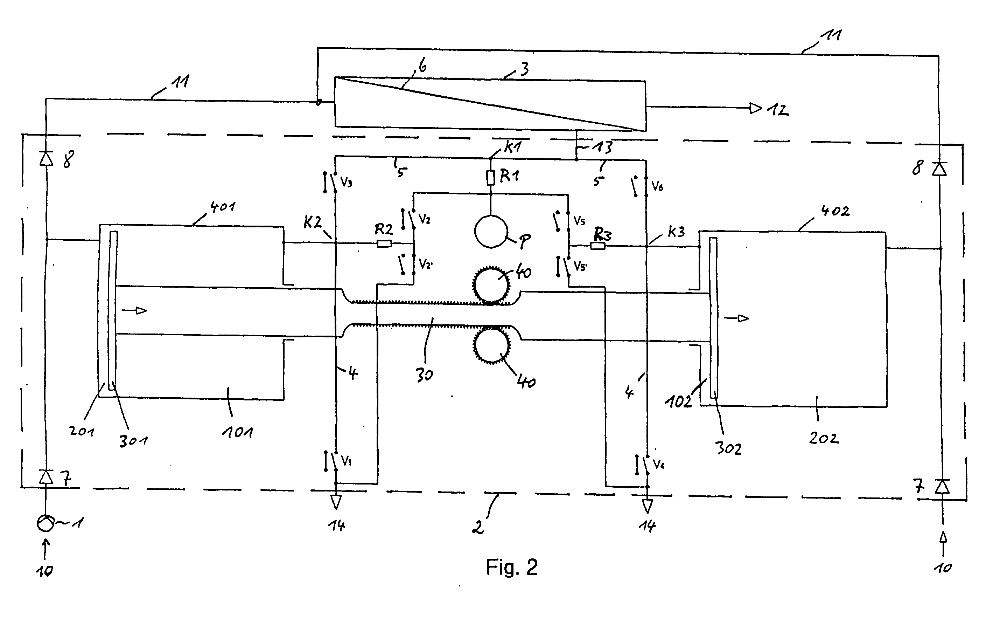

Anhand der in Figur 2 dargestellten Ausführungsform der Erfindung soll insbesondere die Ausgestaltung und Funktionsweise der Druckausgleichsvorrichtung 2 näher erläutert werden. Diese weist hier zwei identische Kolben/Zylinder-Vorrichtungen 401, 402 mit zwei sich fluchtend gegenüberliegend angeordneten Zylindern auf, die jeweils eine Eingangskammer 201, 202 zur Aufnahme des Salzwassers 10 und jeweils eine Ausgangskammer 101, 102 zur Aufnahme des konzentrierten Salzwassers 13 aufweisen. Innerhalb der Kolben/Zylinder-Vorrichtungen 401, 402 ist jeweils ein spezieller Kolben 301, 302 angeordnet, der den Kolbeninnenraum in die genannten Kammern unterteilt und der im Bild in horizontaler Richtung innerhalb der Kolbenanordung verfahrbar ist. Von der Förderpumpe 1 führt jeweils eine Zuleitung mit einem (passiven) Rückschlagventil 7 zu den Eingangskammern 201, 202. Die Rückschlagventile 7 sind dabei derart ausgestaltet, dass sie sich öffnen und einen Durchfluss ermöglichen, wenn der Druck in der Zuleitung größer ist als in den Eingangskammern 201, 202. Vergleichbare Rückschlagventile 8, die jedoch eine andere Durchflussrichtung aufweisen, befinden sich in den Zuleitungen von den Eingangskammern 201, 202 zu dem Membranmodul 3.

In den Zuleitungen 5 vom Membranmodul 3 zu den Ausgangskammern 101, 102 und in den Ableitungen 4 von den Ausgangskammern 101, 102 sind dagegen aktiv schaltbare Hauptventile V3, V6 bzw. V1, V4 angeordnet, über die der Zufluss des konzentrierten Salzwassers 13 vom Membranmodul 3 bzw. der Abfluss des konzentrierten Salzwassers 14 aus der Druckausgleichsvorrichtung 2 gesteuert werden kann.

Die Kolben 301, 302 sind mittels einer Kolbenstange 30 fest miteinander verbunden. Ritzel 40, die z. B. durch elektrische Getriebemotoren angetrieben werden können und in eine an der Kolbenstange 30 angebrachte Verzahnung eingreifen, können die Kolbenstange 30 und darüber die Kolben 301, 302 antreiben, um Druckverluste auszugleichen.

Die Kolben sind so angeordnet, dass sie gegenphasig arbeiten. Befindet sich also ein Kolben in einer Stellung, in welcher das Volumen der Eingangskammer 202 maximal und das Volumen der Ausgangskammer 102 minimal ist, so befindet sich der andere, über die Kolbenstange 30 verbundene Kolben in einer Stellung, in welcher das Volumen der Eingangskammer 201 minimal und das Volumen der Ausgangskammer 101 maximal ist (vgl. Figur 2). In dieser Situation ist die Eingangskammer 202 mit Wasser gefüllt und die Ausgangskammer 101 ist mit konzentriertem Salzwasser gefüllt. Die Ventile V1, V3, V4 und V6, die hier als Schalter dargestellt sind, werden so gesteuert, dass nun V3 und V4 geschlossen werden, während V1 und V6 geöffnet werden.

Ein Öffnen eines Ventils bedeutet in diesem Zusammenhang das Herstellen einer Strömungsverbindung, um einen Durchfluss zuzulassen, wozu das Ventil rein mechanisch dazu geöffnet wird. Analog bedeutet das Schließen eines Ventils das Unterbrechen einer Strömungsverbindung, um einen Durchfluss zu unterbinden, wozu rein mechanisch das Ventil dazu geschlossen wird.

Durch das Öffnen des Hauptventils V1 entweicht zunächst der Druck des konzentrierten Salzwassers in der Ausgangskammer 101. Durch das Öffnen des Hauptventils V6 wird die Ausgangskammer 102 mit Druck (beispielsweise ca. 70 bar) beaufschlagt und das konzentrierte Salzwasser strömt in diese Kammer ein. Gleichzeitig wird durch den Druck beaufschlagten Kolben das in der Eingangskammer 202 befindliche Salzwasser zum Membranmodul 3 gepresst.

Da die Kolben so angeordnet sind, dass sie gegenphasig arbeiten, bewirkt das Einleiten des (mit beispielsweise 70 bar) Druck beaufschlagten Konzentrats in die Ausgangskammer 102 durch die Kolbenstange 30 eine Bewegung des anderen Kolbens 301, der dadurch die drucklose Ausgangskammer 101 leert. Gleichzeitig entsteht in der Eingangskammer 201 ein Unterdruck, der Salzwasser ansaugt und diese Kammer füllt.

Ist die Ausgangskammer 102 gefüllt, werden die Hauptventile entsprechend gesteuert und der entgegengesetzte Vorgang läuft ab.

Da das Membranmodul bevorzugt mit ca. 80 bar betrieben wird, um eine ausreichend hohe Süsswassererzeugung zu verwirklichen, und maximal ca. 10 bar als Druckverlust an der Membran auftreten, stehen am Konzentratabfluss 5 des Membranmoduls 3 mindestens noch die oben genannten ca. 70 bar Druck des konzentrierten Salzwassers zur Verfügung.

Um die Hauptventile insbesondere beim Öffnen und Schließen von den hohen Druckänderungen zu entlasten, die einen Verschleiss der Hauptventile bewirken, sind erfindungsgemäß parallel zu den Hauptventilen V1, V3, V4, V6 Neben- oder Bypass-Ventile V2, V2', V5, V5' vorgesehen. Diese Nebenventile weisen einen deutlich geringeren Querschnitt als die Hauptventile und eine erheblich höhere Druckresistenz auf. Daher kann durch eine geeignete Steuerung der Nebenventile die Belastung der Hauptventile deutlich verringert und damit deren Lebensdauer proportional erhöht werden.

Weiter ist ein Druckbehälter P vorgesehen, der mit dem Ausgang des Membranmoduls 3 für das konzentrierte Salzwasser verbunden und daher mit demselben Druck beaufschlagt ist, wiedas konzentrierte Salzwasser selbst, also beispielsweise etwa mit 70 bar. Die bei den Ventilbetätigungen in Folge von Volumenverlusten unvermeidlich auftretenden Druckschwankungen sollen dadurch ausgeglichen werden, um einen möglichst konstanten Betriebsdruck im Membranmodul 3 herzustellen.

Weiter sind zwischen dem Ausgang des Membranmoduls 3 für das konzentrierte Salzwasser und den Ausgangskammern 101, 102 mehrere als Widerstände dargestellte Durchflussmengenbegrenzer R1, R2, R3 vorgesehen, die einen abrupten Druckausgleich verhindern sollen, indem sie die maximale Durchflussmenge begrenzen und somit zu einem allmählichen Druckausgleich und damit zu langsamen Druckänderungen an Stelle schlagartiger Schwankungen beitragen sollen. Diese als "Strömungswiderstände" wirkenden Durchflussmengenbegrenzer können unterschiedlich dimensioniert sein.

Die beiden zwischen dem Knoten K2 und den Nebenventilen V2, V2' bzw. zwischen dem Knoten K3 und den Nebenventilen V5, V5' angeordneten Durchflussmengenbegrenzer R2, R3 können eine größere Durchflussmenge zulassen, als der zwischen dem Knoten K1 und dem Druckbehälter P angeordnete Durchflussmengenbegrenzer R1, da die Durchflussmengenbegrenzer R2 und R3 bei jeder Betätigung der benachbarten Nebenventile V2, V2' bzw. V5, V5' einen Druckausgleich in einer akzeptablen Zeit zulassen sollen. R1 ist dagegen ständig mit dem Konzentratauslass des Membranmoduls 3 verbunden, so dass ein Druckausgleich in dem Druckbehälter P ununterbrochen erfolgen kann. Der Durchflussmengenbegrenzer R1 kann daher einen hohen Strömungswiderstand aufweisen und nur einen geringen Durchfluss zulassen. Dementsprechend stark ist die Entkopplung des Konzentratkreises von dem Membranmodul 3, so dass die Rückwirkungen von Druckschwankungen auf das Membranmodul 3 vernachlässigbar klein sind. In diesem Zusammenhang sei auch erwähnt, dass die Hauptventile V3 und V6 immer nur dann betätigt werden, wenn durch die Nebenventile V2 und V5 bereits ein Druckausgleich zwischen dem Knoten K1 und den Knoten K2, K3 hergestellt wurde. Die Hauptventile V3 und V6 werden also stets drucklos betätigt, so dass dabei keine Druckschwankungen entstehen.

Durch die Ausbildung der Nebenventile V2, V2', V5, V5', die ohnehin einen geringen Querschnitt aufweisen, wird die maximal mögliche Durchflussmenge begrenzt, so dass diese Nebenventile die Funktion der Durchflussmengenbegrenzer automatisch mit übernehmen können.

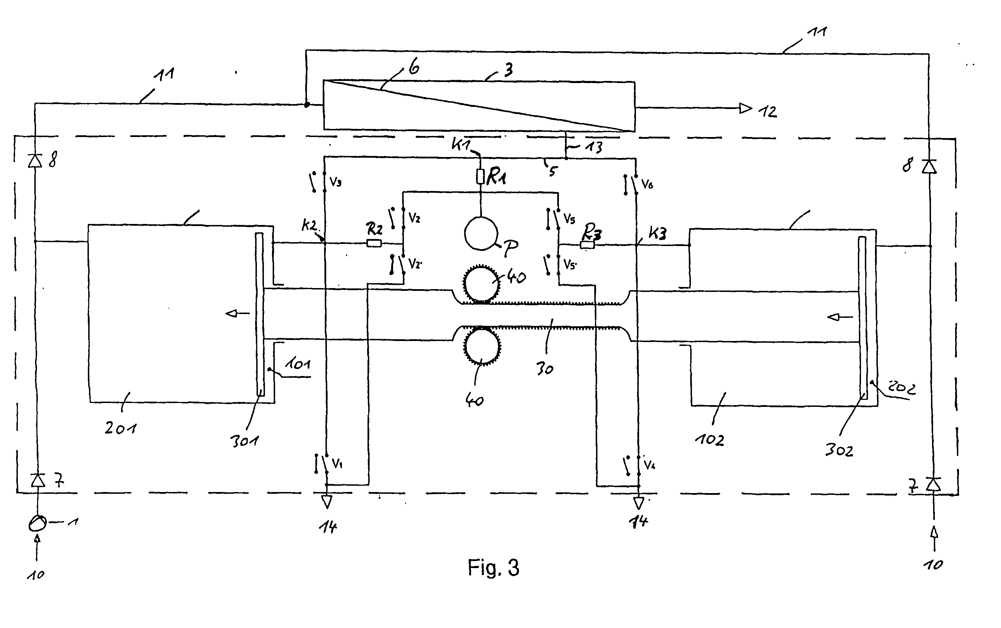

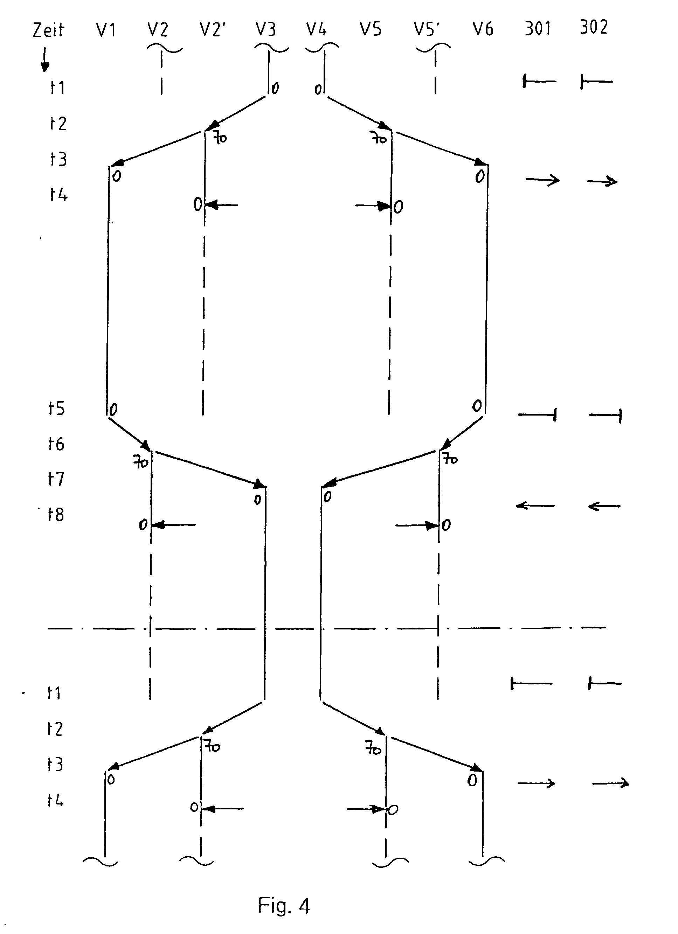

Nachfolgend wird nun ein Betriebszyklus einer erfindungsgemäßen Vorrichtung anhand der in den Figuren 2 und 3 gezeigten Blockschaltbilder sowie anhand des in Figur 4 gezeigten Ablaufdiagramms beschrieben. Dabei geben die in das in Figur 4 gezeigte Diagramm eingetragenen Zahlenwerte den Druckabfall über dem jeweiligen Ventil zum Zeitpunkt der Betätigung an.

Ausgangssituation ist die in Figur 2 gezeigte Situation. Die Kolben 301, 302 in beiden Kolben/Zylinder-Vorrichtungen haben soeben die äußerste linke Position erreicht. Dies ist ebenfalls in dem Ablaufdiagramm in Figur 4 angedeutet (siehe die beiden rechten Spalten). Die Hauptventile V3 und V4 sind noch geöffnet. Da der Druckabfall über diesen Ventilen 0 ist, schließen beide Ventile drucklos (Zeitpunkt t1). Spätestens zu diesem Zeitpunkt müssen auch die Nebenventile V2 und V5' schließen, um die Knoten K2 und K3 vom Konzentratablauf bzw. Konzentratauslass des Membranmoduls 3 zu trennen. Zu diesem Zeitpunkt sind alle Ventile geschlossen.

Zur Vorbereitung der entgegengesetzten Bewegung der Kolben 301, 302 wird nun das Nebenventil V2' geöffnet (Zeitpunkt t2), um den am Knoten K2 anstehenden Druck von ca. 70 bar gegenüber dem Konzentratablauf abzubauen. Da das Ventil V2' ein Nebenventil mit einem geringen Querschnitt ist, ist der Volumenstrom gering. Eine plötzlich Druckschwankung wird durch den Durchflussmengenbegrenzer R2 bzw. das Nebenventil V2' selbst unterbunden.

Gleichzeitig wird das Hauptventil V5 geöffnet, um den nach dem Entleeren des konzentrierten Salzwassers aus der Ausgangskammer 102 drucklosen Knoten K3 mit Druck zu beaufschlagen. Diese Druckbeaufschlagung erfolgt ebenfalls allmählich, da hat der Durchflussmengenbegrenzer R3 den Durchfluss begrenzt. Am Knoten K3 baut sich also der Druck auf, der auch am Knoten K1 ansteht.

Da der Knoten K1 durch einen Durchflussmengenbegrenzer R1 mit hohem Strömungswiderstand von dem Hauptventil V5 entkoppelt ist, erfolgt der Ausgleich aus dem Druckspeicher P, der wiederum über den Durchflussmengenbegrenzer R1 gegen den Knoten K1 aufgefüllt wird. Die Druckschwankung am Konzentratauslass des Membranmoduls 3 wird daher im Wesentlichen durch die Dimensionierung dieses Durchflussmengenbegrenzers R1 bestimmt, so dass ein relativ konstanter Druck am Knoten K1 verwirklichbar ist.

Sobald der Druck am Knoten K2 durch das Nebenventil V2' abgebaut und der Druck am Knoten K3 durch das Nebenventil V5 aufgebaut ist, können die Hauptventile V1 und V6 drucklos öffnen (Zeitpunkt t3), und die entgegengesetzte Kolbenbewegung beginnt. Dies ist durch die nach rechts weisenden Pfeile in Figur 4 angedeutet.

Zum Zeitpunkt t4 können die Nebenventile V2' und V5 wieder geschlossen werden. Dieses Schließen der Nebenventile V2' und V5 muss jedoch spätestens zum Zeitpunkt t5 erfolgen, wenn die Kolben 301, 302 die äusserste rechte Position erreicht haben (siehe Figur 3).

Durch die Kolbenbewegung von der äusserst linken in die äusserst rechte Position durch den Druck des in die Ausgangskammer 102 einströmenden konzentrierten Salzwassers ist das Salzwasser aus der Eingangskammer 202 mit einem Druck von ca. 80 bar (70 bar von dem einströmenden Konzentrat und 10 bar von einem Antrieb) in das Membranmodul 3 gepresst worden. Gleichzeitig ist das konzentrierte Salzwasser aus der Ausgangskammer 101 drucklos zum Konzentratablauf transportiert worden und in die Eingangskammer 201 ist Salzwasser eingeströmt. Somit sind zum Zeitpunkt t5 wiederum alle Ventile geschlossen, und durch eine entsprechende Steuerung findet der gleiche Ablauf in entgegengesetzter Richtung statt.

Es sei an dieser Stelle angemerkt, dass die Pumpe 1 nicht im Wesentlichen zum Einleiten von Salzwasser 10 in die Eingangskammern 201, 202 vorgesehen ist, sondern die Entstehung von sogenannten Kavitationen, also Bereichen mit Unterdruck im Wasserstrom des in die Eingangskammern 201, 202 einströmenden Salzwassers 10 verhindern soll. Durch die turbulente Strömung sind solche Bereiche nicht stabil. Umgebungswasser wird nämlich durch diesen Unterdruck angesaugt und dringt in diese Bereich ein. Dadurch erreicht es derart hohe Geschwindigkeiten, dass es durchaus Partikel aus den Leitungswänden und Armaturen herausschlagen kann, was relativ schnell zu Schäden führen kann, die einen regelmäßig wiederkehrenden Austausch solcher Teile erfordern. Die Pumpe 10 hat bei dem erfindungsgemäßen Zweikammersystem also nicht wie bei bekannten Vorrichtungen einen hohen Arbeitsdruck, sondern arbeitet gleichsam wie ein Turbolader bei Verbrennungsmaschinen mit einem geringen Druck, der ausreicht, um Kavitationen beim Einsaugen des Salzwassers nicht auftreten zu lassen.

Ausgangssituation ist nun die in Figur 3 gezeigte Situation. Die Kolben 301, 302 in beiden Zylindern haben soeben die äusserste rechte Position erreicht. Dies ist ebenfalls in dem in Figur 4 gezeigten Ablaufdiagramm angedeutet. Die Ventile V1 und V6 sind noch geöffnet. Da der Druckabfall über den Ventilen Null ist, schließen beide Ventile drucklos (Zeitpunkt t5). Spätestens zu diesem Zeitpunkt müssen auch die Nebenventile V2' und V5 schließen, um die Knoten K2 und K3 vom Konzentratablauf bzw. Konzentratauslass des Membranmoduls 3 zu trennen. Nun sind alle Ventile geschlossen.

Zur Vorbereitung der entgegengesetzten Bewegung der Kolben 301, 302 wird nun das Nebenventil V5' geöffnet (Zeitpunkt t6), um den am Knoten K3 anstehenden Druck von ca. 70 bar gegenüber dem Konzentratablauf abzubauen. Da das Ventil V5' ein Nebenventil mit einem geringen Querschnitt ist, ist der Volumenstrom gering. Eine plötzliche Druckschwankung wird durch den Durchflussmengenbegrenzer R3 unterbunden.

Gleichzeitig wird das Nebenventil V2 geöffnet, um den nach dem Entleeren des konzentrierten Salzwassers aus der Ausgangskammer 101 drucklosen Knoten K2 mit Durck zu beaufschlagen. Diese Druckbeaufschlagung erfolgt ebenfalls allmählich, da der Durchflussmengenbegrenzer R2 den Durchfluss begrenzt. Am Knoten K2 baut sich also der Druck auf, der auch am Knoten K1 ansteht. Da der Knoten K1 durch einen Durchflussmengenbegrenzer R1 mit hohem Strömungswiderstand von dem Nebenventil V2 entkoppelt ist, erfolgt der Ausgleich aus dem Druckspeicher P, der wiederum über den Durchflussmengenbegrenzer R1 aufgefüllt wird.

Sobald der Druck am Knoten K3 durch das Nebenventil V5' abgebaut und der Druck am Knoten K2 durch das Nebenventil V2 aufgebaut ist, können die Hauptventile V3 und V4 drucklos öffnen (Zeitpunkt t7) und die entgegengesetzte Kolbenbewegung beginnt. Dies ist durch die nach links weisenden Pfeile in Figur 4 angedeutet.

Zum Zeitpunkt t8 können die Nebenventile V5' und V2 wieder geschlossen werden. Dieses Schließen der Nebenventile V5' und V2 muss jedoch spätestens zum Zeitpunkt t1 des nächsten Zyklus erfolgen, wenn die Kolben 301, 302 die äusserste linke Position erreicht haben (siehe Figur 2).

Durch die Kolbenbewegung von der äusserst rechten in die äusserst linke Position durch den Druck des in die Ausgangskammer 101 einströmenden konzentrierten Salzwassers ist das Salzwasser aus der Eingangskammer 201 mit einem Druck von ca. 80 bar in das Membranmodul 3 gepresst worden. Gleichzeitig ist das konzentrierte Salzwasser aus der Ausgangskammer 102 drucklos zum Konzentratablauf transportiert worden, und in die Eingangskammer 202 ist Salzwasser eingeströmt.

Somit sind zum Zeitpunkt t1 des nächsten Zyklus wiederum alle Ventile geschlossen, und durch eine entsprechende Steuerung findet der gleiche Ablauf in entgegengesetzter Richtung statt. Die strichpunktierte Linie in dem Ablaufdiagramm in Figur 4 deutet das Ende eines Zyklus und gleichzeitig den Beginn eines neuen Zyklus an.

Aus den Druckangaben bei den einzelnen Ventilen ist erkennbar, dass die Hauptventile stets drucklos schalten, während die Nebenventile, die geeignet bemessen sind, lediglich beim Öffnen mit einem hohen Druck beaufschlagt sind.

Hier liegt der ganz entscheidende Vorteil der vorliegenden Erfindung.

Eine Dichtung zwischen dem Kolben und dem jeweiligen Zylinder der Kolben/Zylinder-Vorrichtung ist nicht zwingend erforderlich, da eine geringe Durchmischung beider Flüssigkeiten die Wirkung der Vorrichtung nicht nennenswert beeinflusst. Eine Abdichtung des Zylinders am Austritt der Kolbenstange ist hingegen zwingend erforderlich.

Es kann auch vorgesehen sein, die aktuelle Kolbenposition ständig zu erfassen. Diese Positionserfassung ist wichtig, da eine Kollision zwischen Kolben und Zylinder verhindert werden muss, um Beschädigungen zu vermeiden. Die Kolbenposition kann dabei direkt am Zylinder oder indirekt z. B. an der Kolbenstange erfasst werden.

Da eine Pumpe zum Ergänzen des Druckverlustes einerseits durch den hohen Druck und andererseits durch das aggressive Medium Salzwasser sehr hoch beansprucht wird und dementsprechend ausfallgefährdet ist, ersetzt die vorliegende Erfindung eine solche Pumpe im Wesentlichen oder vollständig durch den Antrieb der Kolbenstange, wodurch Druckverluste ausgeglichen werden.

Der Druckbehälter glättet die Druckschwankungen am Membranmodul. Eine weitere Glättung von Druckschwankungen ergibt sich durch eine mehrfache Anordnung einer erfindungsgemäßen Vorrichtung an einem Membranmodul, also durch eine Anordnung von mindestens zwei jeweils ein Paar von Kolben/Zylinder-Vorrichtungen aufweisenden Druckausgleichsvorrichtungen an einem Membranmodul, insbesondere dann, wenn diese phasenversetzt zueinander arbeiten, so dass zu einem Zeitpunkt t nur die Kolben jeweils einer Druckausgleichsvorrichtung in der äussersten linken bzw. rechten Position sind. Dabei kann je nach Auslegung ein gemeinsamer Antrieb für alle Druckausgleichsvorrichtungen oder auch ein separater Antrieb für jede Druckausgleichsvorrichtung vorgesehen sein.

Die Erfindung ist nicht auf die gezeigte Ausführungsform beschränkt, insbesondere kann die Druckausgleichsvorrichtung auch anders ausgestaltet sein. Denkbar sind beispielsweise Ausgestaltungen mit mehreren Paaren von zwei Kolben/Zylinder-Vorrichtungen und/oder unterschiedlichen oder anders gestalteten Kolben/Zylinder-Vorrichtungen. Auch sind die angegebenen Zahlenwerte nur Beispielswerte zur Verdeutlichung der Erfindung, so dass sich bei veränderter Kolbengeometrie beispielsweise auch andere Druckverhältnisse ergeben können.

Mit dem erfindungsgemäßen Verfahren und der erfindungsgemäßen Vorrichtung wird ein sehr hoher Wirkungsgrad bei der Energierückgewinnung in Höhe von mindestens 90% erreicht. Die Förderpumpe braucht nur einen von der Entnahmemenge abhängigen Bruchteil des für die Umkehrosmose erforderlichen Arbeitsdrucks von etwa 70 bis 80 bar zu erzeugen, was einen hohen Kostenreduktions- und Wartungsvorteil nach sich zieht. Generell werden somit die Herstellungskosten für eine Vorrichtung zum Entsalzen von Wasser und Bereitstellung von Trinkwasser deutlich verringert. Die Kolbengeometrie ist nicht auf eine einzige Möglichkeit beschränkt. Je nach Salzgehalt des Wassers kann bzw. sollte der osmotische Druck angepaßt werden. Bei Brackwasser - geringster Salzgehalt - kann ein niedrigerer Druck gewählt werden.

## Patentansprüche

1. Verfahren zum Entsalzen von Wasser mit der Umkehrosmose, insbesondere zum Entsalzen von Meerwasser, bei dem Salzwasser (10) unter einem ersten Druck (p₁) in eine Druckausgleichsvorrichtung (2) eingeleitet und von der Druckausgleichsvorrichtung (2) unter einem zweiten, höheren Druck (p₂) in ein Membranmodul (3) geleitet wird, wobei aus dem Membranmodul (3) entsalztes Wasser (12) und konzentriertes Salzwasser (13) ausgeleitet wird, wobei
das aus dem Membranmodul (3) ausgeleitete konzentrierte Salzwasser (13) unter etwa dem zweiten Druck (p₂) in die Druckausgleichsvorrichtung (2) kontinuierlich eingeleitet und dort zur Beaufschlagung des in die Druckausgleichsvorrichtung (2) eingeleiteten Salzwassers (10) mit etwa dem zweiten Druck (p₂) und zur Einleitung des Salzwassers (11) in das Membranmodul (3) benutzt wird und wobei die Einleitung des konzentrierten Salzwassers (13) in die Druckausgleichsvorrichtung (2) und die Ableitung des konzentrierten Salzwassers (14) aus der Druckausgleichsvorrichtung (2) mittels gesteuerter Hauptventile (V1, V3, V4, V6) erfolgt,
wobei parallel zu den Hauptventilen (V1, V3, V4, V6) angeordnete Nebenventile (V2, V2', V5, V5') derart gesteuert werden, dass Belastungsspitzen beim Öffnen und/oder Schließen der Hauptventile (V1, V3, V4, V6) gemindert werden, wozu die Nebenventile (V2, V2', V5, V5') während des Öffnens bzw. Schließens des jeweils parallel dazu angeordneten Hauptventils (V1, V3, V4, V6) geöffnet werden,
**dadurch gekennzeichnet, dass** mittels eines am Eingang der Druckausgleichsvorrichtung (2), über den das konzentrierte Salzwasser (13) aus dem Membranmodul (3) eingeleitet wird, angeordneter Druckbehälters (P) Druckschwankungen ausgeglichen werden.

2. Verfahren nach Anspruch 1,
**dadurch gekennzeichnet, dass** das konzentrierte Salzwasser (13) aus dem Membranmodul (3) in eine Ausgangskammer (101, 102) einer von mindestens zwei Kolben/Zylinder-Vorrichtungen (401, 402) der Druckausgleichsvorrichtung (2) unter etwa dem zweiten Druck (p₂) eingeleitet wird und dort derart auf den Kolben (301, 302) einwirkt, dass das in eine Eingangskammer (201, 202) derselben Kolben/Zylinder-Vorrichtung (401, 402) eingeleitete Salzwasser (10) unter etwa dem zweiten Druck (p₂) in das Membranmodul (3) geleitet wird.

3. Verfahren nach Anspruch 2,
**dadurch gekennzeichnet, dass** das konzentrierte Salzwasser (13) wechselweise in die Ausgangskammer (101, 102) einer der Kolben/Zylinder-Vorrichtungen (401, 402) eingeleitet wird, wodurch jeweils gleichzeitig das Salzwasser (11) aus der Eingangskammer (201, 202) derselben Kolben/Zylinder-Vorrichtung (401, 402) zum Membranmodul (3) geleitet wird, und dass gleichzeitig in die Eingangskammer (201, 202) einer anderen Kolben/Zylinder-Vorrichtung (401, 402) Salzwasser (10) unter dem ersten Druck (p₁) eingeleitet wird, wodurch aus der Ausgangskammer (101, 102) derselben Kolben/Zylinder-Vorrichtung (401, 402) das konzentrierte Salzwasser (14) unter geringem Druck ausgeleitet wird.

4. Verfahren nach Anspruch 3,
**dadurch gekennzeichnet, dass** die Kolben/Zylinder-Vorrichtungen (401, 402) der Druckausgleichsvorrichtung (2) derart gesteuert werden, dass jeweils gleichzeitig in die Eingangskammer (201, 202) mindestens einer Kolben/Zylinder-Vorrichtung (401, 402) Salzwasser (10) eingeleitet, aus der Ausgangskammer (101, 102) derselben Kolben/Zylinder-Vorrichtung (401, 402) konzentriertes Salzwasser (14) ausgeleitet, in die Ausgangskammer (101, 102) mindestens einer anderen Kolben/Zylinder-Vorrichtung (401, 402) konzentriertes Salzwasser (13) eingeleitet und aus der Eingangskammer (201, 202) derselben Kolben/Zylinder-Vorrichtung (401, 402) Salzwasser (11) der Membranvorrichtung (3) zugeleitet wird.

5. Verfahren nach einem der vorhergehenden Ansprüche,
**dadurch gekennzeichnet, dass** die Druckausgleichsvorrichtung (2) zwei gegenphasig arbeitende Kolben/Zylinder-Vorrichtungen (401, 402) aufweist und dass die Kolben (301, 302) der Kolben/Zylinder-Vorrichtungen (401, 402) durch eine Kolbenstange (30) verbunden sind.

6. Verfahren nach Anspruch 5,
**dadurch gekennzeichnet, dass** die Kolbenstange (30) mittels eines Antriebs angetrieben wird.

7. Verfahren nach einem der vorhergehenden Ansprüche,
**dadurch gekennzeichnet, dass** der Querschnitt der Nebenventile (V2, V2', V5, V5') geringer ist als der Querschnitt der Hauptventile (V1, V3, V4, V6).

8. Verfahren nach einem der vorhergehenden Ansprüche,
**dadurch gekennzeichnet, dass** mittels Durchflussmengenbegrenzer (R1, R2, R3) in den Zuleitungen zu den Nebenventilen die maximalen Durchflussmengen durch die Nebenventile (V2, V2', V5, V5') gesteuert werden.

9. Verfahren nach einem der vorhergehenden Ansprüche,
**dadurch gekennzeichnet, dass** die Nebenventile (V2, V2', V5, V5') nur während des Öffnungs- bzw. Schließvorgangs des jeweils parallel dazu angeordneten Hauptventils (V1, V3, V4, V6) geöffnet sind.

10. Verfahen nach einem der vorhergehenden Ansprüche,
**dadurch gekennzeichnet, dass** die Steuerung der Haupt- und Nebenventile derart erfolgt, dass die Hauptventile drucklos schalten.

11. Verfahren nach einem der vorhergehenden Ansprüche,
**dadurch gekennzeichnet, dass** die Position der Kolben (301, 302) kontinuierlich bestimmt wird.

12. Verfahren nach einem der vorhergehenden Ansprüche,
**dadurch gekennzeichnet, dass** die Druckausgleichsvorrichtung (2) mehrere Paare vom mittels jeweils einer Kolbenstange (30) verbundenen Kolben/Zylinder-Vorrichtungen (401, 402) aufweist und dass die Paare phasenversetzt arbeiten.

13. Vorrichtung zur Durchführung des Verfahrens nach einem der vorhergehenden Ansprüche mit einer Förderpumpe (1) zum Einleiten von Salzwasser (10) in die Druckausgleichsvorrichtung (2) und mit einem Membranmodul (3) zum Trennen von aus der Druckausgleichsvorrichtung (2) eingeleitetem Salzwasser (11) in entsalztes Wasser (12) und konzentriertes Salzwasser (13), wobei
zwischen Membranmodul (3) und Druckausgleichsvorrichtung (2) jeweils eine im Betrieb kontinuierlich unter etwa dem zweiten Druck (p₂) stehende Verbindungsleitung (4) angeordnet ist zur Zuführung des konzentrierten Salzwassers (13) vom Membranmodul (3) zur Druckausgleichsvorrichtung (2) und zur Zuführung des Salzwassers (11) von der Druckausgleichsvorrichtung (2) zum Membranmodul (3) und wobei gesteuerte Hauptventile (V1, V3, V4, V6) vorgesehen sind zur Einleitung des konzentrierten Salzwassers (13) in die Druckausgleichsvorrichtung (2) und zur Ableitung des konzentrierten Salzwassers (14) aus der Druckausgleichsvorrichtung (2), wobei parallel zu den Hauptventilen (V1, V3, V4, V6) gesteuerte Nebenventile (V2, V2', V5, V5') angeordnet sind zur Minderung von Belastungsspitzen beim Öffnen und/oder Schließen der Hauptventile (V1, V3, V4, V6), wozu die Nebenventile (V2, V2', V5, V5') während des Öffnens bzw. Schließens des jeweils parallel dazu angeordneten Hauptventils (V1, V3, V4, V6) geöffnet sind,
**dadurch gekennzeichnet, dass** am Eingang der Druckausgleichsvorrichtung (2), über den das konzentrierte Salzwasser (13) aus dem Membranmodul (3) eingeleitet wird, ein Druckbehälters (P) angeordnet ist zum Ausgleich von Druckschwankungen.

## Claims

1. A method of desalinating water by means of reverse osmosis, in particular desalinating sea water, in which salt water (10) is introduced under a first pressure (p₁) into a pressure-balancing device (2) and is conveyed, under a second, higher pressure (p₂), by the pressure-balancing device (2) into a membrane module (3), wherein desalinated water (12) and concentrated salt water (13) are conveyed from the membrane module (3), wherein the concentrated salt water (13) conveyed from the membrane module (3) is continuously introduced under approximately the second pressure (p₂) into the pressure-balancing device (2) and there is used to act, with approximately the second pressure (p₂), upon the salt water (10) introduced into the pressure-balancing device (2) and to introduce the salt water (11) into the membrane module (3) and wherein the introduction of the concentrated salt water (13) into the pressure-balancing device (2) and the conveying of the concentrated salt water (14) away from the pressure-balancing device (2) takes place by means of controlled main valves (V1, V3, V4, V6), wherein auxiliary valves (V2, V2', V5, V5') arranged parallel to the main valves (V1, V3, V4, V6) are controlled in such a manner that load peaks upon opening and/or closing of the main valves (V1, V3, V4, V6) are lessened, wherefore the auxiliary valves (V2, V2', V5, V5') are opened during opening or closing as the case may be of the respective main valve (V1, V3, V4, V6) arranged parallel thereto, **characterised in that** pressure fluctuations are balanced by means of a pressure vessel (P) arranged at the inlet, via which the concentrated salt water (13) is introduced from the membrane module (3), of the pressure-balancing device (2).

2. A method according to claim 1, **characterised in that** the concentrated salt water (13) is introduced, under approximately the second pressure (p₂), from the membrane module (3) into a delivery chamber (101, 102) of one of at least two piston and cylinder devices (401, 402) of the pressure-balancing device (2) and there acts upon the piston (301, 302) in such a manner that the salt water (10) introduced into an entry chamber (201, 202) of the same piston and cylinder device (401, 402) is conveyed under approximately the second pressure (p₂) into the membrane module (3).

3. A method according to claim 2, **characterised in that** the concentrated salt water (13) is introduced alternately into the delivery chamber (101, 102) of one of the piston and cylinder devices (401, 402), whereby in each case the salt water (11) is conveyed simultaneously from the entry chamber (201, 202) of the same piston and cylinder device (401, 402) to the membrane module (3), and **in that** salt water (10) is simultaneously introduced, under the first pressure (p₁), into the entry chamber (201, 202) of another piston and cylinder device (401, 402), whereby the concentrated salt water (14) is conveyed, under a low pressure, from the delivery chamber (101, 102) of the same piston and cylinder device (401, 402).

4. A method according to claim 3, **characterised in that** the piston and cylinder devices (401, 402) of the pressure-balancing device (2) are controlled in such a manner that, at any one time, simultaneously salt water (10) is introduced into the entry chamber (201, 202) of at least one piston and cylinder device (401, 402), concentrated salt water (14) is conveyed from the delivery chamber (101, 102) of the same piston and cylinder device (401, 402), concentrated salt water (13) is introduced into the delivery chamber (101, 102) of at least one other piston and cylinder device (401, 402) and salt water (11) is conveyed from the entry chamber (201, 202) of the same piston and cylinder device (401, 402) to the membrane device (3).

5. A method according to any one of the preceding claims, **characterised in that** the pressure-balancing device (2) has two piston and cylinder devices (401, 402) working in opposition of phase, and **in that** the pistons (301, 302) of the piston and cylinder devices (401, 402) are connected by a piston rod (30).

6. A method according to claim 5, **characterised in that** the piston rod (30) is driven by means of a drive.

7. A method according to any one of the preceding claims, **characterised in that** the cross-section of the auxiliary valves (V2, V2', V5, V5') is smaller than the cross-section of the main valves (V1, V3, V4, V6).

8. A method according to any one of the preceding claims, **characterised in that** the maximum quantities of flow through the auxiliary valves (V2, V2', V5, V5') are controlled by means of flow rate limiters (R1, R2, R3) in the feed lines of the auxiliary valves.

9. A method according to any one of the preceding claims, **characterised in that** the auxiliary valves (V2, V2', V5, V5') are open only during the opening or closing operation as the case may be of the respective main valve (V1, V3, V4, V6) arranged parallel thereto.

10. A method according to any one of the preceding claims, **characterised in that** the control of the main and auxiliary valves takes place in such a manner that the main valves switch in an unpressurised manner.

11. A method according to any one of the preceding claims, **characterised in that** the position of the pistons (301, 302) is continuously determined.

12. A method according to any one of the preceding claims, **characterised in that** the pressure-balancing device (2) has a plurality of pairs of the piston and cylinder devices (401, 402), each pair connected by means of a respective piston rod (30), and **in that** the pairs work out of phase.

13. An apparatus for carrying out the method according to any one of the preceding claims, having a feed pump (1) for the introduction of salt water (10) into the pressure-balancing device (2) and having a membrane module (3) for the separation of salt water (11) introduced from the pressure-balancing device (2) into desalinated water (12) and concentrated salt water (13), wherein a respective connecting line (4), in operation continuously being below approximately the second pressure (p₂), is arranged between the membrane module (3) and the pressure-balancing device (2) in order to feed the concentrated salt water (13) from the membrane module (3) to the pressure-balancing device (2) and to feed the salt water (11) from the pressure-balancing device (2) to the membrane module (3), and wherein controlled main valves (V1, V3, V4, V6) are provided to introduce the concentrated salt water (13) into the pressure-balancing device (2) and to convey the concentrated salt water (14) away from the pressure-balancing device (2), wherein controlled auxiliary valves (V2, V2', V5, V5') are arranged parallel to the main valves (V1, V3, V4, V6) in order to lessen load peaks upon opening and/or closing of the main valves (V1, V3, V4, V6), wherefore the auxiliary valves (V2, V2', V5, V5') are open during the opening or closing as the case may be of the respective main valve (V1, V3, V4, V6) arranged parallel thereto, **characterised in that** at the inlet, via which the concentrated salt water (13) is introduced from the membrane module (3), of the pressure-balancing device (2) there is arranged a pressure vessel (P) to balance pressure fluctuations.

## Revendications

1. Procédé de dessalement de l'eau au moyen de l'osmose inversée, en particulier pour le dessalement d'eau de mer, avec lequel de l'eau salée (10) est introduite sous une première pression (p₁) dans un dispositif de compensation de pression (2) et est conduite depuis le dispositif de compensation de pression (2) sous une deuxième pression plus élevée (p₂) dans un module à membrane (3), alors que de l'eau dessalée (12) et de l'eau salée concentrée (13) sont conduites hors du module à membrane (3), alors que l'eau salée concentrée (13) conduite hors du module à membrane (3) est introduite en continu sous à peu près la deuxième pression (p₂) dans le dispositif de compensation de pression (2) et y est utilisée pour appliquer à l'eau salée (10) introduite dans le dispositif de compensation de pression (2) à peu près la deuxième pression (p₂) et pour introduire l'eau salée (11) dans le module à membrane (3) et alors que l'introduction de l'eau salée concentrée (13) dans le dispositif de compensation de pression (2) et l'évacuation de l'eau salée concentrée (14) hors du dispositif de compensation de pression (2) ont lieu à l'aide de vannes principales commandées (V1, V3, V4, V6), des vannes secondaires (V2, V2', V5, V5') disposées parallèlement aux vannes principales (V1, V3, V4, V6) étant commandées de telle façon que des pointes de charges se produisant au moment de l'ouverture et/ou de la fermeture des vannes principales (V1, V3, V4, V6) soient réduites, les vannes secondaires (V2, V2', V5, V5') étant pour cela ouvertes lors de l'ouverture ou de la fermeture de la vanne principale (V1, V3, V4, V6) qui est respectivement placée en parallèle, **caractérisé en ce que** des fluctuations de pression sont compensées à l'aide d'un réservoir sous pression (P) disposé à l'entrée du dispositif de compensation de pression (2), par l'intermédiaire de laquelle est introduite l'eau salée concentrée (13) provenant du module à membrane (3).

2. Procédé selon la revendication 1, **caractérisé en ce que** l'eau salée concentrée (13) est introduite sous à peu près la deuxième pression (p₂) à partir du module à membrane (3) dans une chambre de sortie (101, 102) d'un parmi au moins deux dispositifs à pistons et cylindres (401, 402) du dispositif de compensation de pression (2) et agit à cet endroit de telle façon sur le piston (301, 302) que l'eau salée (10) introduite dans une chambre d'entrée (201, 202) du même dispositif à pistons et cylindres (401, 402) soit conduite sous à peu près la deuxième pression (p₂) dans le module à membrane (3).

3. Procédé selon la revendication 2, **caractérisé en ce que** l'eau salée concentrée (13) est introduite alternativement dans la chambre de sortie (101, 102) d'un des dispositifs à pistons et cylindres (401, 402), en fonction de quoi l'eau salée (11) est conduite respectivement simultanément depuis la chambre d'entrée (201, 202) du même dispositif à pistons et cylindres (401, 402) vers le module à membrane (3) et **en ce qu'**en même temps de l'eau salée (10) est introduite sous la première pression (p₁) dans chambre d'entrée (201, 202) d'un autre dispositif à pistons et cylindres (401, 402), en fonction de quoi l'eau salée concentrée (14) est conduite sous une faible pression hors de la chambre de sortie (101, 102) du même dispositif à pistons et cylindres (401, 402).

4. Procédé selon la revendication 3, **caractérisé en ce que** les dispositifs à pistons et cylindres (401, 402) du dispositif de compensation de pression (2) sont commandés de telle façon que respectivement en même temps de l'eau salée (10) soit introduite dans la chambre d'entrée (201, 202) d'au moins un dispositif à pistons et cylindres (401, 402), de l'eau salée concentrée (14) soit conduite hors de la chambre de sortie (101, 102) du même dispositif à pistons et cylindres (401, 402), de l'eau salée concentrée (13) soit introduite dans la chambre de sortie (101, 102) d'au moins un autre dispositif à pistons et cylindres (401, 402) et que de l'eau salée (11) soit amenée au module à membrane (3) à partir de la chambre d'entrée (201, 202) du même dispositif à pistons et cylindres (401, 402).

5. Procédé selon l'une quelconque des revendications précédentes, **caractérisé en ce que** le dispositif de compensation de pression (2) comprend deux dispositifs à pistons et cylindres (401, 402) travaillant en opposition de phases et **en ce que** les pistons (301, 302) des dispositifs à pistons et cylindres (401, 402) sont reliés par une tige de pistons (30).

6. Procédé selon la revendication 5, **caractérisé en ce que** la tige de pistons (30) est entraînée au moyen d'un moteur.

7. Procédé selon l'une quelconque des revendications précédentes, **caractérisé en ce que** la section des vannes secondaires (V2, V2', V5, V5') est inférieure à la section des vannes principales (V1, V3, V4, V6).

8. Procédé selon l'une quelconque des revendications précédentes, **caractérisé en ce que** les débits maximaux traversant les vannes secondaires (V2, V2', V5, V5') sont commandés au moyen de limiteurs de débits (R1, R2, R3) se trouvant dans les lignes d'arrivée aux vannes secondaires.

9. Procédé selon l'une quelconque des revendications précédentes, **caractérisé en ce que** les vannes secondaires (V2, V2', V5, V5) ne sont ouvertes que lors de l'opération d'ouverture ou de fermeture de la vanne principale (V1, V3, V4, V6) qui est respectivement disposée en parallèle avec celles-ci.

10. Procédé selon l'une quelconque des revendications précédentes, **caractérisé en ce que** la commande des vannes principales et secondaires a lieu de telle façon que les vannes principales effectuent une commutation hors pression.

11. Procédé selon l'une quelconque des revendications précédentes, **caractérisé en ce que** la position des pistons (301, 302) est déterminée en continu.

12. Procédé selon l'une quelconque des revendications précédentes, **caractérisé en ce que** le dispositif de compensation de pression (2) comprend plusieurs paires de dispositifs à pistons et cylindres (401, 402) reliés par respectivement une tige de pistons (30) et **en ce que** les paires travaillent en décalage de phases.

13. Dispositif pour la réalisation du procédé selon l'une quelconque des revendications précédentes avec une pompe d'alimentation (1) pour l'introduction d'eau salée (10) dans le dispositif de compensation de pression (2) et avec un module à membrane (3) pour la séparation de l'eau salée (11) introduite à partir du dispositif de compensation de pression (2) en eau dessalée (12) et en eau salée concentrée (13), alors que, pour amener l'eau salée concentrée (13) du module à membrane (3) au dispositif de compensation de pression (2) et pour amener l'eau salée (11) du dispositif de compensation de pression (2) au module à membrane (3), une conduite de liaison (4), dans laquelle règne lors du fonctionnement en continu à peu près la deuxième pression (p₂), est disposée respectivement entre le module à membrane (3) et le dispositif de compensation de pression (2) et alors que des vannes principales commandées (V1, V3, V4, V6) sont prévues pour introduire l'eau salée concentrée (13) dans le dispositif de compensation de pression (2) et pour évacuer l'eau salée concentrée (14) hors du dispositif de compensation de pression (2), des vannes secondaires commandées (V2, V2', V5, V5') étant disposées parallèlement aux vannes principales (V1, V3, V4, V6) pour réduire des pointes de charges se produisant lors de l'ouverture et/ou de la fermeture des vannes principales (V1, V3, V4, V6), les vannes secondaires (V2, V2', V5, V5') étant pour cela ouvertes lors de l'ouverture ou de la fermeture de la vanne principale (V1, V3, V4, V6) qui est respectivement placée en parallèle, **caractérisé en ce qu'**à l'entrée du dispositif de compensation de pression (2), par l'intermédiaire de laquelle est introduite l'eau salée concentrée (13) provenant du module à membrane (3), est disposé un réservoir sous pression (P) servant à la compensation des fluctuations de pression.
